# EUROPEAN PATENT APPLICATION

(11) **EP 1 511 227 A1**
(43) Date of publication of application: **02.03.2005**
(21) Application number: 03360099.0
(22) Date of filing: 27.08.2003
(51) Int. Cl.: H04L 12/42

(54) **Ring network system**

(71) Applicant: ALCATEL, 75008 Paris (FR)
(72) Inventor: Dembeck, Lars, 71088 Holzgerlingen (DE); Körber, Wolfgang, 70329 Stuttgart (DE)
(74) Representative: Kohler Schmid Möbus

(57) **Abstract**

The invention relates to a ring network system and a method for managing and operating the ring network system. The ring network system is comprising at least two operative traffic subnetworks, a first subnetwork (Left ring) comprising a first set of network nodes connected by a first communication path through which signals can propagate and a second subnetwork (Right ring) comprising a second set of network nodes connected by a second communication path through which signals can propagate, the second set of network nodes being different from the first set of network nodes. The ring network is comprising at least one shortcut comprising a first and a second switching and/or routing element (20,21) being connected by a communication channel (22), said shortcut being part of both, the first and the second communication path.

## Description

This invention relates to a ring network system comprising at least two operative traffic subnetworks, a first subnetwork comprising a first communication path and a first set of network nodes through which signals can propagate and a second subnetwork comprising a second communication path and a second set of network nodes through which signals can propagate, the second set of network nodes being different from the first set of network nodes. A ring network consists of at least three nodes, connected one behind the other to form a ring with data traffic going around the ring in one direction.

Ring networks are mainly used in metropolitan and wide area applications. Metropolitan Area Networks (MAN) are often built as cable rings serially connecting access nodes in a circumference up to 100 km and even long haul transmission networks, so called Wide Area Networks (WAN), partly consisting of synchronous SDH/SONET rings in many cases. An example for such a network is given in the WO 02/097479 A2. SONET and SDH are a set of related standards for synchronous data transmission over fiber optic networks. SONET is short for Synchronous Optical NETwork and SDH is an acronym for Synchronous Digital Hierarchy.

Ring networks can be operated using different transmission protocols, wherein data is transmitted in various ways, for example in data packets. For example networks are operated as TDM- or SDH- or ATM-networks. An example for a data packet network is a token ring network.

Despite its simplicity, a disadvantage of the ring network topology is that communication traffic necessarily crosses all nodes on the way from the source, e.g. a ring node or a connection point to other network domains, to the receiving node. This causes cumulating latency due to node internal processing and could also increase the risk of faults or complete transmission failure. Even if data addressed to other nodes are passed through intermediate nodes transparently or if nodes are coupled passively to e.g. an optical fibre ring, repeated signal amplification or complete signal regeneration on distant transmissions might be necessary depending on system specific transmission constraints, e.g. signal attenuation and/or distortion due to chromatic dispersion, for instance, and/or increasing Bit Error Rate (BER) etc. This is equally true for the case of a cable cut were traffic is redirected around the ring in opposite direction on a separate, parallel protection cable or using extra transmission channels, which normally is initiated at the node before the faulty transmission link.
In addition, power failure of one ring node normally leads to the failure of the whole ring, even node installations e.g. new nodes or supplements of existing nodes and maintenance periods will have this consequence.

Apart from ring networks, meshed networks also are proposed. The disadvantages of ring networks could be overcome by using meshed networks. In fully meshed networks any network node is connected to each other directly, while in ring networks the network nodes are connected only to their neighbours to build a ring on which the communication is established. To build a fully meshed network it would be necessary to connect each node directly. This would lead to enormous connecting costs. As a solution to this problems smaller ring networks are often connected via switching and/or routing elements (Hubs). A solution lying between a ring network and a fully meshed network is a partly meshed network. In partly meshed networks not every node is connected directly to each other node of the network. This leads to the disadvantage that not directly connected nodes can only communicate via a communication path having another node in-between.

Two subnetwork rings can be connected by having one node in common. This node is built as a hub between the two subnetwork rings. In the simplest case this results in a double-ring network connected with a common hub, or rather a single connection node.
Another possibility to connect subrings is to establish a connection between one node of a first subring and one node of a second subring. The two connected nodes also are built as hubs and a communication channel is established on the connection between those hubs. In the simplest case this results in a double-ring network connected with an intermediate section between a pair of hubs, or rather connection nodes. It is also possible to form a multiple-ring network, connected with intermediate (multiplex) sections between pairs of hubs/connection nodes.

An example for connecting subnetwork rings is given in the US 5,299,312, which teaches a ring network system wherein subnetwork rings are connected by another ring network system. Each subnetwork consists of one node, which is part of the connecting ring network system.

Another possibility to connect network nodes is proposed in the US 6,490,247, which teaches to build a ring network system by connecting different network nodes via a switch. Every network node has two connections to the switch. On a first connection, communication from the switch to the node is established and on a second connection, communication from the node to the switch is established. For building up a ring communication the communication data is switched to the different connections in a way that the data is travelling around, passing each node.

Also a single ring with a double protection communication path, as described in the WO 02091681, is well known.

Disadvantages of the existing connection systems of ring networks according to the state of the art are the following:
- All inter-ring traffic crosses a single hub or in case of a connection with intermediate (multiplex) section(s) between pair(s) of hubs/connection nodes all inter-ring traffic crosses two hubs, both needing the full bandwidth capacity;
- If the routing function of the hub fails, the whole traffic, even at least some intra-ring traffic, in case of a connection with intermediate (multiplex) sec-tion(s) between pair(s) of hubs/connection nodes the whole inter-ring traffic, even some intra-ring traffic of the affected ring, is affected or blocked;
- For the double-ring each subring may have a separate management system, if e.g. both belong to separate domains;
- Hot swap of hub in double-ring is not possible without affecting all ring traffic or at least affecting all traffic of the corresponding ring in case of a connection with intermediate (multiplex) section(s) between pair(s) of hubs/connection nodes and possible connections to outside networks;

It is therefore an object of the invention to provide a ring network system and a method for managing and operating the ring network which overcome the problems associated with the related art, in particular which can be established in already existing ring networks to mitigate these problems easily.

According to the invention, this object is attained by a ring network system comprising at least two operative traffic subnetworks (subrings), a first subnetwork comprising a first set of network nodes connected by a first communication path through which signals can propagate and a second subnetwork comprising a second set of network nodes connected by a second communication path through which signals can propagate. The network node sets are not being identical, which means the second set of network nodes being different from the first set of network nodes. The ring network is comprising at least one shortcut comprising a first and a second switching and/or routing element being connected by a communication channel, said shortcut being part of both, the first and the second communication path.

The inventive ring network system provides the following advantages:
- The data transmission time is faster in rings with actively coupled ring nodes which are built as switching and/or routing elements to form a shortcut according to the invention. The less ring nodes crossed by the transmitted data the less latency and/or processing time generating ring nodes are crossed and the less risk of transmission faults is existing;
- The transmission length is shorter because of the cut of ring part(s) when the addressed node belongs to other subring(s) or ring parts;
- The inventive ring network system has a reduced power budget, especially this is true for actively and passively coupled nodes, e.g. coupled to a fibre ring which then has less fibre amplifiers. This leads to the possibility to install larger rings and /or a higher number of nodes;
- The operation of one or more subring(s) is possible while a power failure occurs inside other subring(s), or nodes are added, complemented or are under maintenance;

The advantages are also achieved when an existing operative ring network system having a great number of network nodes is split in two or more smaller subrings. The inventive ring network system is beneficial under normal operation and in a failure case (protection/restoration). Protection/restoration paths are shorter and protection/restoration times are faster in many cases.

In a preferred embodiment of the invention the shortcut is designed to establish data traffic through its communication channel in a first direction from the first switching and/or routing element to the second switching and/or routing element and in an opposite direction from the second switching and/or routing element to the first switching and/or routing element. This embodiment of the inventive ring network system is advantageous, for having established ring data traffic on the communication path of the subnetworks and on a communication path connecting both sets of network nodes simultaneously, when the rotational directions of the data travelling around in the ring networks is the same in each network.

In another preferred embodiment of the invention the communication channel is comprising at least two subchannels, preferably two data transmission cables, one having the data traffic in the first direction and the other one having the data traffic in the opposite direction established on. In this case it is not necessary to switch data, e.g. time slots for the data travelling around in the different ring networks. The subnetworks can be operated simultaneously.

In another preferred embodiment of the invention at least one of the switching and/or routing elements is comprising a hub or an ingress/egress point towards other networks, preferably ring networks.

In another preferred embodiment of the invention the said two switching and/or routing elements are comprising routing capability means being designed to switch and/or route received data to a desired subnetwork node destination following a communication path which is most appropriate during normal network operation. The routing capability means preferably are comprising a computer system loaded with a computer program with software code sections by which the switching and/or routing is carried out. This leads to less effort concerning the management of the ring network system. There need not be established data traffic concerning the appropriate path on the ring network.

According to the invention, the object concerning a method for managing and operating the inventive ring network system is attained by executing the steps of receiving data from a network node in a first communication path by one of the switching and/or routing elements, having a desired subnetwork node destination; determining a communication path which is most appropriate for said received data to reach the desired subnetwork node destination; deciding whether the received data is to be switched and/or routed into the communication channel of the shortcut, the switching and/or routing element belongs to or into a second communication path of a second subnetwork the switching and/or routing element belongs to; establishing the determined most appropriate communication path by switching and/or routing the received data into the communication path or the communication channel according to the decision made and sending the received data to the desired subnetwork node destination via the established communication path.

The inventive method allows to switch and/or route data on a communication path on the inventive ring network system having lowest costs of any kind.

In a preferred embodiment of the inventive method the communication path which is most appropriate is determined by choosing the way to the desired subnetwork node destination which is geographically shortest or which has lowest data traffic or which passes the fewest network nodes. In case of a network failure a communication path which is still in operation is to be chosen. Alternatively the most appropriate way is to be chosen as having the best network maintenance, the lowest data loss probability, the lowest signal degradation and/or the lowest transmission costs. The most appropriate communication path may also have been laid down by traffic engineering. These different possibilities of choosing an appropriate communication path can also be combined.

In another preferred embodiment of the inventive method the management information between the first and the second switching and/or routing elements can be transmitted directly on the communication channel connecting themselves. This leads to less data traffic on the ring network system and secures the transmission of the management information.

The inventive method is physically attained by a computer program product, which can be loaded directly into the memory of a digital computer and which comprises software code sections by which the steps of the inventive method are carried out when the product is running on a computer.

A ring network system according to the invention is preferably build as a computer ring network system, which is loaded with a computer program with software code sections by which the steps of the inventive method are carried out.

Further advantageous features of the invention are defined in the depending claims.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.
In fig. 1 a ring network according to the invention is shown schematically in the case of normal operation.
In fig. 2 ring network according to the invention is shown schematically in the case of failure.

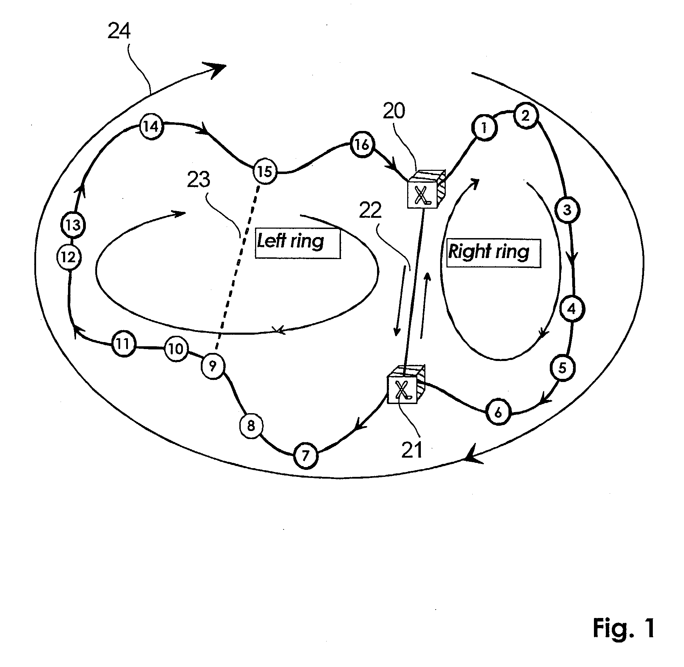

In figure 1 a ring network system according to the invention with a first shortcut and a possible second shortcut 23 is shown. The second shortcut would lead the ring network system to consist of three subnetworks. The ring network system consists of sixteen network nodes numbered by one to sixteen. The network nodes are connected subsequently to build a main ring network. The main ring network is comprising a main communication path connecting a first and a second set of network nodes, one node being successively connected by the main communication path to another. A first switching and/or routing element 20 is situated between two successively connected neighbouring nodes and a second switching and/or routing element 21 is situated between another two of successively connected neighbouring nodes. Communication data is travelling around the main communication path in the direction as shown by arrow 24. The shortcut is built by establishing an extra physical point-to-point connection which builds a communication channel 22 between the switching and/or routing elements (hubs) 20, 21 between non-successive ring nodes. For this purpose two hubs 20, 21 are connected between two pairs of neighbouring network nodes. In the case of figure 1 one hub 20 is established between nodes 16 and 1 and the second hub 21 is established between nodes 6 and 7. The first shortcut is comprising the hubs 20, 21 and the communication channel 22. The shortcut is part of two operative traffic subnetworks (subrings), the left ring and the right ring. The left ring consists of the first set of network nodes numbered by seven to sixteen and the shortcut. It is build out of the left side of the main ring network from hub 20 directly to ring nodes seven to sixteen, bypassing the right ring side. The direction data is travelling around in a communication path on the left ring is shown be means of a ring shaped arrow, positioned in the left ring. The right ring consists of the second set of network nodes numbered by one to six and the shortcut. It is build out of the right side of the main ring network from ring nodes one to six directly to hub 20, bypassing the left ring side. The direction data is travelling around in a communication path on the right ring is also shown be means of a ring-shaped arrow, positioned in the right ring. Intra-ring traffic is established on each subring by means of different shortcut cables or channels which have opposite direction on the shortcut link for each subring. The shortcut cables and the direction of data traffic between the hubs is shown schematically by means of two arrows in the figure. The directions data is travelling in the rings is chosen in a way that the data traffic on the main communication path is the same as the directions in the communication paths of the subrings. The hubs are having routing capability for the choice of the appropriate output towards original ring or shortcut. Shortcut end points, more precisely the switching and/or routing elements, are predestined as Hub or ingress/egress points towards other rings and networks. Management information between Hubs can be directly transmitted on the shortcut, which is more safe. In the simplest case the ring network system consists of two subrings being part of the main ring network and one shortcut, each subring network having a set of nodes with at least three nodes to build its ring and additionally the two switching and/or routing elements which are part of the shortcut. Every node of the set of nodes of the first subring is different to each node of the set of nodes of the second subring, except the two switching and/or routing elements which are part of the shortcut.
Such an inventive shortcut between ring nodes built as switches splits an original existing ring network system into two smaller subrings or many subrings for multiple shortcuts, thus opening the possibility of markedly reduced transmission lengths. Using the shortcut, intra-ring traffic can be established on each subring by means of different shortcut cables or channels which have opposite direction on the shortcut link for each subring. Assuming that at least one of the switches is a Hub where a ring connects to other metro rings or separate network domains, ingressing/egressing traffic can also be shortcut from and/or to Hub(s) directly to and/or from the corresponding subring. If it is not the nearest subring part in transmission direction on the whole ring related to the corresponding Hub anyhow. Often not a full circle diameter length d is needed for such a shortcut link because real rings are installed with respect to geographical and urban constraints and therefore some nodes might have much closer distance as is indicated in figure 1. But even in the circle case with centric shortcuts much transmission length is saved and also the number of crossed nodes is reduced strongly when symmetric node and traffic distribution is assumed. The transmission length is shortened by (π/2-1)d theoretically and all nodes of the near subring are bypassed when a node on the distant subring is reached via the shortcut. The switches need some routing and/or switching capability for the choice of the appropriate output towards original ring or shortcut.

The main differences of the inventive ring network system and main advantages compared to a double-ring as known in the state of the art are:
- If shortcut(s) according to the invention are introduced into an already existing ring network system the operation and/or maintenance of the system and management of the already existing ring, which was planned and built as a single ring, are improved. Already existing multiple rings can also benefit from newly introduced shortcuts according to the invention;
- The shortcuts allow for flexible scaling of the existing rings. The shortcut site and the number of shortcuts can be freely chosen;
- The invention allows for better Traffic Engineering (TE), because the traffic can be routed and/or distributed by means of one more additional routing entity or more for multiple shortcuts in the same ring topology, thus relaxing physical constraints as bandwidth, dispersion, attenuation, distortion etc. occur;
- For a double (multiple)-ring, according to the state of the art each sub-ring normally has a separate management system if e.g. both belong to separate domains. In the invention the transport of OAM information is much easier, because even in the case of node or hub failure a transmission path can be found, also a single-vendor environment mitigates possible communication problems;
- Hot swap of hub in a double (multiple)-ring according to the state of the art, connected through a single hub is not possible without affecting all ring traffic and possible connections to outside networks. In the invention one hub remains operable for specific ring traffic and even keeps connection to outside network domains;
- In difference to a double (multiple)-ring, connected through a single hub or connection node the invention uses a common multiplex section (=shortcut) for ring connection;
- In a double (multiple)-ring, connected through a single hub all inter-ring traffic crosses the single hub; in the invention the hub-traffic is distributed, thus relaxing capacity problems occur;
- If the routing function of the hub in a double (multiple)-ring, connected through a single hub fails, the whole traffic and even some intra-ring traffic is affected; in the inventive ring network system half of inter-ring traffic will still reach its destination, in opposite direction if necessary;
- In contrast to a double (multiple)-ring, connected with intermediate (multiplex) section(s) between pair(s) of hubs/connection nodes the invention uses a common multiplex section (=shortcut) for ring connection, not an intermediate one;
- If all inter-ring traffic crosses two hubs as in a double (multiple)-ring, connected with intermediate (multiplex) section(s) between pair(s) of hubs/connection nodes, both are needing the full bandwidth capacity. In the invention the hub-traffic is distributed, thus relaxing capacity problems;
- If the routing function of a hub in a double (multiple)-ring, connected with intermediate (multiplex) section(s) between pair(s) of hubs/connection nodes fails, the whole inter-ring traffic and even some intra-ring traffic of the affected ring is blocked; in the invention half of inter-ring traffic will still reach its destination, in opposite direction if necessary;

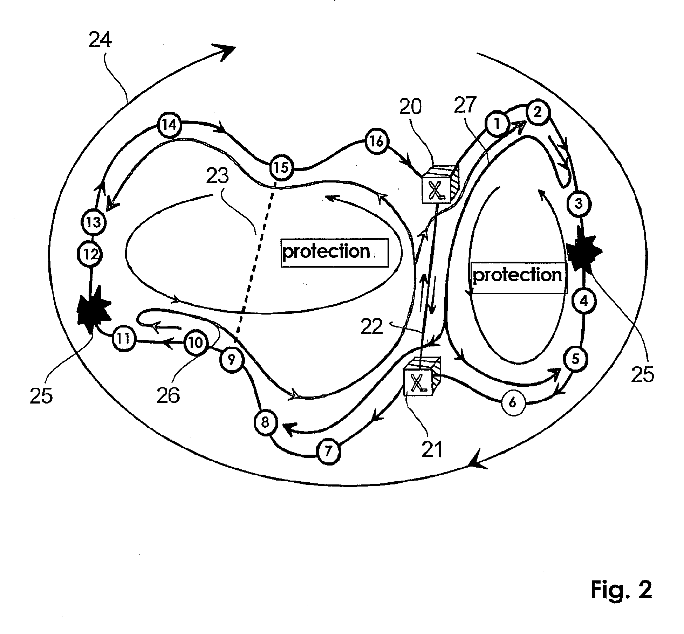

In figure 2 the failure case in the ring network system of figure 1, as an example for cable and/or channel breaks 25 on each subring, is shown. As shown in the figure data traffic reaching the neighbouring nodes to the cable and/or channel breaks 25 are reverted in the opposite direction of the direction data is travelling around on the subnetworks according to the failure-free case, as shown in figure 1. The communication paths on which the data is travelling in failure case is called protection path. Two examples of protection paths 26, 27 are shown in figure 2 schematically. Also the directions data is travelling around on the protection communication paths 26, 27 on the left ring and on the right ring are shown be means of ring shaped arrows, positioned in the left and in the right ring. Because of the shortcut, built of two hubs 20, 21 and the communication channel 22 connecting the hubs, data traffic can be also reverted directly on the subring at affected nodes, for example on a separate protection cable or protection channels on the same cable, and switched to the correct subring at the hubs 20, 21, respectively. This generally achieves faster times for protection/restoration processes in many cases. Moreover, a power failure of an active node in a subring will not interrupt the whole ring traffic, but only the corresponding subring is affected when shortcuts can be used. Also, nodes on one subring can be added, supplemented or be in maintenance without preventing data to be sent to the other subring. The hubs 20, 21 need some routing capability to select the appropriate subring for the protected traffic and also fault signaling may be necessary as it is in the case without shortcut(s).

## Claims

1. A ring network system comprising at least two operative traffic subnetworks, a first subnetwork comprising a first set of network nodes connected by a first communication path through which signals can propagate and a second subnetwork comprising a second set of network nodes connected by a second communication path through which signals can propagate, the second set of network nodes being different from the first set of network nodes,
**characterised in that**
the ring network is comprising at least one shortcut comprising a first and a second switching and/or routing element being connected by a communication channel, said shortcut being part of both, the first and the second communication path.

2. The ring network system according to claim 1,
**characterised in that** the shortcut is designed to establish data traffic through its communication channel in a first direction from the first switching and/or routing element to the second switching and/or routing element and in a opposite direction from the second switching and/or routing element to the first switching and/or routing element.

3. The ring network system according to claim 2,
**characterised in that** the communication channel is comprising at least two subchannels, preferably two data transmission cables, one having the data traffic in the first direction and the other one having the data traffic in the opposite direction established on.

4. The ring network system according to claim 1,
**characterised in that** at least one of the switching and/or routing elements is comprising a hub or an ingress/egress point towards other networks, preferably ring networks.

5. The ring network system according to claim 1,
**characterised in that** said two switching and/or routing elements are comprising routing capability means being designed to switch and/or route received data to a desired subnetwork node destination following a communication path which is most appropriate during normal network operation.

6. The ring network system according to claim 5,
**characterised in that** the routing capability means are comprising a computer system loaded with a computer program with software code sections by which the switching and/or routing is carried out.

7. A method for managing and operating a ring network system according to claim 1, wherein data traffic is established on the communication paths of its subnetworks, comprising the steps of
- receiving data from a network node in a first communication path by one of the switching and/or routing elements, having a desired subnetwork node destination;
- determining a communication path which is most appropriate for the said received data to reach the desired subnetwork node destination;
- deciding whether the received data is to be switched and/or routed into the communication channel of the shortcut, the switching and/or routing element belongs to or into a second communication path of a second subnetwork the switching and/or routing element belongs to;
- establishing the determined most appropriate communication path by switching and/or routing the received data into the communication path or the communication channel according to the decision made;
- sending the received data to the desired subnetwork node destination via the established communication path.

8. The method according to claim 7,
**characterised in that** the communication path which is most appropriate is determined by choosing the way to the desired subnetwork node destination which is geographically shortest or which has lowest data traffic or which passes the fewest network nodes or which is still in operation in case of a network failure or which has the best network maintenance, the lowest data loss probability, the lowest signal degradation and/or the lowest transmission costs or which has been laid down by traffic engineering.

9. The method according to claim 7,
**characterised in that** management information between the first and the second switching and/or routing elements can be transmitted directly on the communication channel connecting themselves.

10. Computer program product, which can be loaded directly into the memory of a digital computer and which comprises software code sections by which the steps of the method according to claim 7 are carried out when the product is running on a computer.

11. Computer ring network system loaded with a computer program with software code sections by which the steps of the method according to claim 7 are carried out.
